# FASCICULE DE BREVET EUROPEEN

(11) **EP 0 584 018 B1**
(45) Date de publication et mention de la délivrance du brevet: **22.10.1997**
(21) Numéro de dépôt: 93402069.4
(22) Date de dépôt: 18.08.1993
(51) Int. Cl.: B60S 1/34

(54) **Dispositif d'essuie-glace à tête d'entraînement perfectionnée**
Scheibenwischer mit verbessertem Befestigungsteil
Windscreen wiper with improved mounting head

(30) Priorité: 19.08.1992 FR 9210132
(43) Date de publication de la demande: 23.02.1994
(73) Titulaire: VALEO SYSTEMES D'ESSUYAGE, 78321 La Verrière (FR)
(72) Inventeur: Raymond, Bernard, F-75019 Paris (FR)
(74) Mandataire: Martin, Jean-Jacques

(56) Documents cités:
- EP-A- 0 015 172
- DE-A- 3 926 714
- FR-A- 2 515 121
- GB-A- 2 188 537

## Description

La présente invention concerne le domaine des dispositifs d'essuie-glace, et concerne plus particulièrement un dispositif d'essuie-glace destiné à essuyer un pare-brise de véhicule automobile.

Il est connu des dispositifs d'essuie-glace comprenant une tête d'entraînement apte à être entraînée en rotation autour d'un axe d'entraînement, et un bras d'essuie-glace articulé à une extrémité sur cette tête d'entraînement autour d'un axe de débattement s'étendant transversalement à l'axe d'entraînement. Le bras porte à son autre extrémité un balai adapté à venir au contact de la surface à essuyer. Cette articulation du bras d'essuie-glace sur la tête d'entraînement autour de l'axe de débattement permet notamment au bras d'essuie-glace de pivoter pour suivre la courbure du pare-brise lorsque la tête d'entraînement est entraînée en rotation.

En outre, on connaît du document EP-A-0 015 172 un dispositif d'essuie-glace qui comprend une tête d'entraînement comprenant une pièce définissant un moyeu et un bras qui s'étend de façon oblique par rapport à l'axe du moyeu, les deux parties constituant une seule pièce. A l'extrémité du bras, il est prévu un aménagement pour le montage articulé d'un balai ou porte-raclette. La pièce constituée par le moyeu et le bras oblique, est enrobée dans un bloc en mousse de matériau élastomère ou équivalent pour une question de protection.

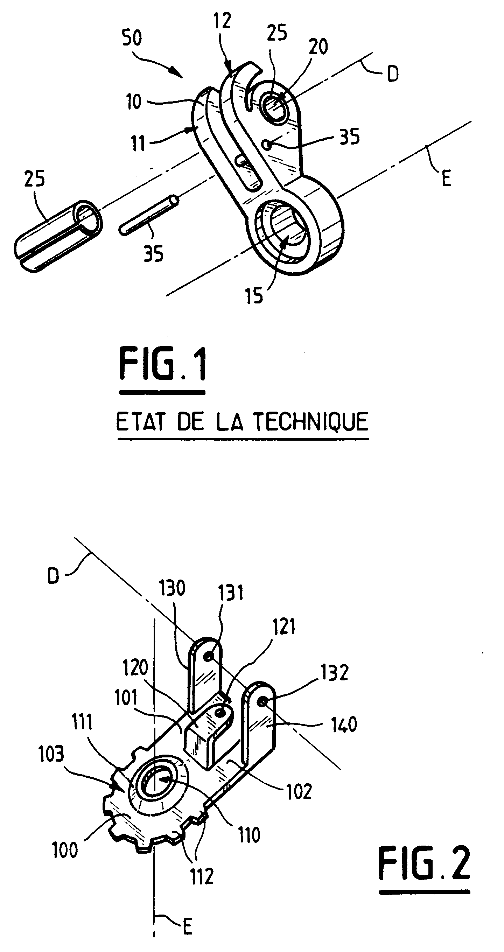

On a représenté sur la figure 1 l'état de la technique sur lequel repose l'invention. On aperçoit sur cette figure une tête d'entraînement connue en elle-même, référencée dans son ensemble 50, et généralement réalisée par moulage puis usinage d'un corps 10 de tête d'entraînement en métal, ce métal étant habituellement un alliage d'aluminium connu sous la dénomination commerciale Zamak. La tête d'entraînement 50 comprend deux alésages traversant 15, 20 d'axes perpendiculaires entre eux, l'un pour recevoir un arbre d'entraînement du dispositif d'essuie-glace autour d'un axe d'entraînement E et l'autre pour recevoir une douille 25 rapportée sur le corps 10, destinée à servir de palier à un tourillon d'articulation d'un bras d'essuie-glace, non représenté, sur la tête d'entraînement autour d'un axe de débattement D. Le corps 10 possède deux flasques 11 et 12 entre lesquels s'étend une tige 35 parallèle a l'axe de débattement D, destinée à l'accrochage sur la tête d'entraînement d'un ressort de pression de contact non représenté, agissant entre la tête d'entraînement et le bras de l'essuie-glace, en vue d'exercer un couple de rappel tendant à presser le balai sur la surface à essuyer.

En raison des tolérances de fabrication, le positionnement relatif des axes d'entraînement E et de débattement D est imprécis, ce qui entraîne une disparité dans les performances des dispositifs d'essuie-glace comportant une tête d'entraînement 50 telle qu'elle vient d'être décrite, notamment en ce qui concerne l'étendue angulaire du balayage et la force d'application du balai sur la surface à essuyer.

La tête d'entraînement 50 est en outre habituellement, pour des raisons esthétiques, coiffée par un capuchon en matière plastique, non représenté. Un mauvais positionnement de l'axe de débattement D, toujours en raison des tolérances de fabrication, par rapport au corps 10, peut avoir pour conséquence un endommagement de ce capuchon lorsque le bras d'essuie-glace est relevé manuellement en vue de libérer le pare-brise, par pinçage du capuchon entre le bras et la tête d'entraînement.

Enfin, les têtes d'entraînement connues sont coûteuses du fait d'avoir à rapporter sur le corps 10, la douille 25 et la tige 35.

La présente invention a pour objet un dispositif d'essuie-glace amélioré remédiant aux inconvénients précités.

La présente invention propose pour cela un dispositif d'essuie-glace comprenant une tête d'entraînement apte à être entraînée en rotation autour d'un axe d'entraînement, un bras d'essuie-glace articulé à une extrémité sur ladite tête d'entraînement autour d'un axe de débattement s'étendant transversalement à l'axe d'entraînement, le bras portant à son autre extrémité un balai adapté à venir au contact d'une surface à essuyer, ladite tête d'entraînement comportant une armature métallique surmoulée d'une matière plastique, ladite armature métallique étant pourvue d'un perçage pour recevoir un arbre d'entraînement et de moyens d'articulation du bras d'essuie-glace comprenant au moins in logement pour accueillir un tourillon d'articulation du bras d'essuie-glace, (Dispositif du type divulgué dans EP-A-0 015 172), caractérisé en ce que ladite armature métallique étant réalisée à partir d'une tôle métallique à l'aide d'opérations de découpage, perçage et pliage, comprenant une platine de base dans laquelle est formé le perçage, définissant les moyens d'articulation, la platine de base se prolongeant latéralement, en éloignement de l'axe d'entraînement par deux languettes espacées munies de deux portions redressées par pliage s'étendant parallèlement à l'axe d'entraînement en regard l'une de l'autre pour former une chape apte à servir de support au tourillon d'articulation du bras d'essuie-glace sur la tête d'entraînement, selon l'axe de débattement, le surmoulage de matière plastique recouvrant ladite platine de base et la partie d'extrémité perçée de ladite portion redressée par pliage, ledit surmoulage comportant un passage cylindrique coïncidant avec ledit logement pour le montage du tourillon d'articulation.

De préférence également, le perçage est bordé par une paroi tronconique, se raccordant à sa base sur ladite platine de base et convergeant en éloignement de celle-ci, venant s'appuyer lors du montage de la tête d'entraînement, sur un arbre d'entraînement de portée conique.

Avantageusement, ladite armature métallique comprend en outre une patte d'accrochage d'un ressort de pression de contact agissant entre la tête d'entraînement et le bras d'essuie-glace, destiné à exercer un couple de rappel tendant à presser le balai sur la surface à essuyer, cette patte présentant au moins un oeillet servant à l'accrochage dudit ressort. De préférence, cette patte s'étend entre lesdites languettes et en direction de l'espace intérieur aux portions redressées.

Dans une réalisation particulière, le dispositif d'essuie-glace comporte de plus un capuchon venant coiffer la tête d'entraînement et retenu sur celle-ci par complémentarité de formes entre des premiers moyens de montage prévus sur la surface interne dudit capuchon et des seconds moyens de montage venus de formation sur la surface externe de la tête d'entraînement.

D'autres caractéristiques et avantages de l'invention apparaîtront à la lecture qui va suivre, d'un exemple de réalisation non limitatif de l'invention, et à l'examen du dessin annexé sur lequel :
- la figure 1, précédemment décrite, est une vue en perspective éclatée des différents éléments constitutifs d'une tête d'entraînement connue,
- la figure 2 est une vue en perspective d'une armature destinée à la réalisation d'une tête d'entraînement conforme à l'invention,
- la figure 3 est une vue en perspective de la tête d'entraînement réalisée par surmoulage de l'armature représentée sur la figure 2,
- la figure 4 est une vue en coupe prise dans un plan médian contenant l'axe d'entraînement et perpendiculaire à l'axe de débattement de la tête d'entraînement représentée sur la figure 3.

On a représenté sur la figure 2, en perspective et de façon schématique, une armature 100 destinée à la réalisation d'une tête d'entraînement selon l'invention. Cette armature 100 est avantageusement réalisée à partir d'une tôle métallique en acier, à l'aide d'opérations choisies parmi les opérations suivantes : découpage, perçage, pliage et emboutissage.

Conformément à une caractéristique avantageuse de l'invention et comme représenté sur la figure 2, cette armature 100 comprend une platine de base 103 en forme de demi-disque, munie d'un perçage 110 pour recevoir un arbre d'entraînement en rotation du dispositif d'essuie-glace autour d'un axe d'entraînement E. De préférence, cet arbre d'entraînement est de portée conique et le perçage 110 est bordé à cet effet sur sa périphérie par une paroi tronconique 111 venue d'emboutissage, se raccordant à sa base sur la platine de base 103, s'étendant longitudinalement selon l'axe d'entraînement E et convergeant en éloignement de la platine 103.

La platine de base 103 se prolonge latéralement, dans une direction perpendiculaire à l'axe E, à l'opposé du bord en demi-cercle pour former deux languettes parallèles 101 et 102 espacées, munies à leur extrémité libre de portions redressées 130 et 140 venues de pliage, s'étendant parallèlement à l'axe E et perpendiculairement au plan de la platine de base 103 et des languettes 101 et 102. Les portions redressées 130 et 140 présentent des logements 131 et 132 disposés en vis-à-vis, pour former une chape apte à accueillir un tourillon d'articulation du bras d'essuie-glace sur la tête d'entraînement autour d'un axe de débattement D perpendiculaire à l'axe d'entraînement E.

On remarquera que l'armature 100 est de préférence, comme représenté, symétrique par rapport à un plan médian contenant l'axe d'entraînement E et perpendiculaire à l'axe de débattement D. De préférence, comme représenté, la platine de base 103 est munie sur sa périphérie en forme de demi-cercle de dentelures 112 destinées à améliorer l'emprise de la matière plastique qui est surmoulée sur cette armature pour former la tête d'entraînement conforme à l'invention, comme cela sera précisé dans la suite.

On remarque également, et conformément à une caractéristique avantageuse de l'invention, que l'armature 100 comprend une patte 120 servant à l'accrochage d'un ressort de pression de contact agissant entre la tête d'entraînement et le bras de l'essuie-glace, ce ressort de pression de contact étant destiné à exercer un couple de rappel tendant à presser le balai sur la surface à essuyer. La patte d'accrochage 120 s'étend au-dessus du plan de la platine de base 103 et des languettes 101 et 102, entre ces deux dernières et en direction de l'espace intérieur aux portions redressées 130 et 140. La patte 120 présente en outre à son extrémité libre un oeillet 121 destiné à l'accrochage du ressort précité.

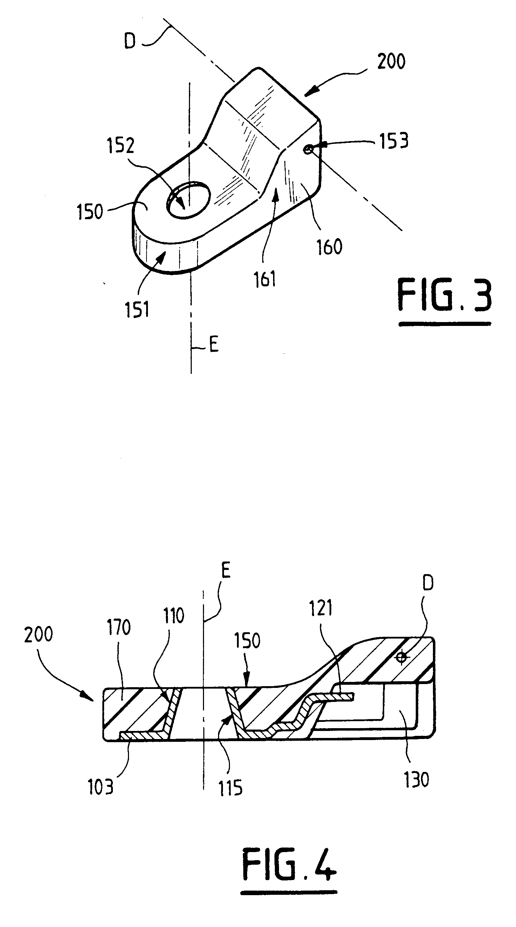

Conformément à une caractéristique de l'invention, l'armature métallique qui vient d'être décrite est recouverte par surmoulage d'une matière plastique pour former une tête d'entraînement 200 conforme à l'invention. Si l'on se reporte maintenant aux figures 3 et 4 qui montrent la pièce 200 obtenue après surmoulage de l'armature 100 avec une matière plastique 170, on remarque que la tête d'entraînement 200 ainsi obtenue comporte de préférence, comme représenté, un méplat 150, bordé selon son épaisseur par une surface demi-cylindrique 151 centrée sur l'axe d'entraînement E et de rayon supérieur au rayon externe des dentelures 112. Les portions redressées 130 et 140 précitées sont recouvertes par une partie renflée 160, prolongeant transversalement à l'axe d'entraînement E le méplat 150.

La partie renflée 160 est bordée latéralement par deux surfaces planes et parallèles entre elles 161, se raccordant tangentiellement sur la surface demi-cylindrique 151. Le méplat 150 comporte un passage cylindrique 152 coïncidant avec le perçage 110 de l'armature 100, et la partie renflée comporte de même un passage cylindrique 153 coïncidant avec les perçages 131 et 132.

Dans un mode de réalisation, le bras d'essuie-glace s'accroche sur les extrémités axiales d'un tourillon engagé dans la chape formée par les portions redressées 130 et 140.

On remarque sur la figure 4 que l'on a ménagé lors du surmoulage de l'armature un vide de matière débouchant à la base de la partie renflée 160 entre les portions redressées 130 et 140, pour ménager un accès à l'oeillet 121 permettant d'accrocher le ressort de pression de contact.

On comprendra que l'on peut ainsi facilement réaliser, par surmoulage, une tête d'entraînement ayant un aspect extérieur particulièrement esthétique. Néanmoins, on peut prévoir, sans sortir du cadre de la présente invention, de coiffer la tête d'entraînement par un capuchon, avantageusement retenu sur celle-ci par complémentarité de formes entre des premiers moyens de montage prévus sur la surface interne du capuchon et des seconds moyens de montage situés sur la surface externe de la tête d'entraînement. Il peut s'agir par exemple d'ergots, venus de moulage, en saillie sur les faces latérales 161.

L'homme de l'art peut, bien entendu, sans sortir du cadre de l'invention, proposer d'autres formes de réalisation pour l'armature 100 et la tête d'entraînement obtenue par surmoulage de cette armature. Il peut être avantageusement incorporé, lors du surmoulage de l'armature, un tube dont les extrémités débouchent, après surmoulage, sur la surface externe de la tête d'entraînement obtenue, en vue de la connection du tube d'une part à une alimentation en fluide de nettoyage du pare-brise, et d'autre part à un tuyau reliant la tête d'entraînement et le balai d'essuyage, ce dernier étant muni d'un ou de plusieurs gicleurs pour l'aspersion du pare-brise.

Finalement, une tête d'entraînement conforme à l'invention, obtenue par surmoulage d'une armature métallique, se substitue avantageusement aux têtes d'entraînement connues, réalisés par moulage d'un corps en alliage métallique, coûteux, puis usinage de ce corps métallique.

De plus, l'utilisation pour le surmoulage d'une matière plastique teintée dans la masse ne rend plus nécessaire de peindre la tête d'entraînement.

## Revendications

1. Dispositif d'essuie-glace comprenant une tête d'entraînement (200) apte à être entraînée en rotation autour d'un axe d'entraînement (E), un bras d'essuie-glace articulé à une extrémité sur ladite tête d'entraînement autour d'un axe de débattement (D) s'étendant transversalement à l'axe d'entraînement, le bras portant à son autre extrémité un balai adapté à venir au contact d'une surface à essuyer, ladite tête d'entraînement (200) comportant une armature métallique (100) surmoulée d'une matière plastique, ladite armature métallique (100) étant pourvue d'un perçage (110) pour recevoir un arbre d'entraînement et de moyens d'articulation du bras d'essuie-glace comprenant au moins un logement (131, 132) pour accueillir un tourillon d'articulation du bras d'essuie-glace, caractérisé en ce que ladite armature métallique (100) est réalisée à partir d'une tôle métallique à l'aide d'opérations de découpage, perçage et pliage, comprend une platine de base (103) dans laquelle est formé le perçage (120), définissant les moyens d'articulation, la platine de base (103) se prolongeant latéralement, en éloignement de l'axe d'entraînement (E) par deux languettes espacées (101, 102) munies de deux portions redressées par pliage (130, 140) s'étendant parallèlement à l'axe d'entraînement (E) en regard l'une de l'autre pour former une chape apte à servir de support au tourillon d'articulation du bras d'essuie-glace sur la tête d'entraînement, selon l'axe de débattement (D), et en ce que le surmoulage de matière plastique (170) recouvre ladite platine de base (103) et la partie d'extrémité perçée de ladite portion redressée par pliage (130, 140), ledit surmoulage (170) comportant un passage cylindrique (153) coïncidant avec ledit logement (131, 132) pour le montage du tourillon d'articulation.

2. Dispositif d'essuie-glace selon la revendication 1, caractérisé en ce que ledit perçage (110) est bordé par une paroi tronconique (111), se raccordant à sa base sur ladite platine de base (103) et convergeant en éloignement de celle-ci, venant s'appuyer, lors du montage de la tête d'entraînement, sur un arbre d'entraînement de portée conique.

3. Dispositif d'essuie-glace selon l'une des revendications 1 ou 2, caractérisé en ce que ladite armature métallique (100) comprend en outre une patte d'accrochage (120) d'un ressort de pression de contact agissant entre la tête d'entraînement et le bras d'essuie-glace, destiné à exercer un couple de rappel tendant à presser le balai sur la surface à essuyer, cette patte présentant au moins un oeillet (121) servant à l'accrochage dudit ressort.

4. Dispositif d'essuie-glace selon la revendication 3, caractérisé en ce que la patte (120) s'étend entre lesdites languettes (101, 102) et en direction de l'espace intérieur aux portions redressées (130, 140).

5. Dispositif d'essuie-glace selon l'une des revendications 1 à 4, caractérisé en ce qu'il comporte de plus un capuchon venant coiffer la tête d'entraîment et retenu sur celle-ci par complémentarité de formes entre des premiers moyens de montage prévus sur la surface interne dudit capuchon et des seconds moyens de montage venus de formation sur la surface externe de la tête d'entraînement (200).

## Claims

1. A windscreen wiper device comprising a driving head (200) capable of being rotationally driven round a driving axis (E), a windscreen wiper arm articulated at one end on the said driving head around a clearance axis (D) extending transversally to the driving axis, the arm hearing at its other end a blade adapted to come into contact with a surface to be wiped, the said driving head (200) comprising a metallic fitting (100) over which a plastic material is moulded, the said metallic fitting (100) being provided with a bore (110) to receive a driving shaft and articulation means for the windscreen wiper arm comprising at least one receptacle (131, 132) for housing a hinge pin of the windscreen wiper arm,
**characterised in that** the said metallic fitting (100) is produced from sheet metal by means of stamping, drilling and bending operations, comprises a base plate (103) in which is formed the bore (110) defining the articulation means, the base plate (103) being laterally extended, as it moves away from the driving axis (E), by two spaced tongues (101, 102) equipped with two portions made upright by bending (130, 140) extending parallel to the driving axis (E) opposite one another to form a cover capable of serving as a support for the hinge pin of the windscreen wiper arm on the driving head, along the clearance axis (D),
**and in that** the moulding of plastic material (170) covers the said base plate (103) and the bored end part of the said portion made upright by bending (130, 140), the said moulding (170) comprising a cylindrical passage (153) coinciding with the said receptacle (131, 132) for the mounting of the hinge pin.

2. A windscreen wiper device according to Claim 1,
**characterised in that** the said bore (110) is bordered by a truncated wall (111), connected at its base to the said base plate (103) and converging as it moves away therefrom, coming to rest, during the mounting of the driving head, on a driving shaft having a conical bearing surface.

3. A windscreen wiper device according to one of Claims 1 or 2,
**characterised in that** the said metallic fitting (100) also comprises a hooking lug (120) of a contact pressure spring acting between the driving head and the windscreen wiper arm, intended to exert a restoring torque tending to press the blade onto the surface to be wiped, this lug having at least one eye (121) serving for the hooking of the said spring.

4. A windscreen wiper device according to Claim 3,
**characterised in that** the lug (120) extends between the said tongues (101, 102) and towards the interior space to the upright portions (130, 140).

5. A windscreen wiper device according to one of Claims 1 to 4,
**characterised in that** it moreover comprises a hood coming to cover the driving head and retained thereon by complementary shapes between the first mounting means provided on the internal surface of the said hood and second mounting means formed integrally on the outer surface of the driving head (200).

## Patentansprüche

1. Scheibenwischer, umfassend ein Antriebsteil (200), das drehend um eine Antriebsachse (E) angetrieben werden kann, einen Scheibenwischerarm, der mit einem Ende an dem besagten Antriebsteil schwenkbar um eine Auslenkachse (D) gelagert ist, die sich quer zur Antriebsachse erstreckt, wobei der Wischerarm an seinem anderen Ende ein Wischerblatt trägt, das auf eine zu wischende Fläche angedrückt werden kann, wobei das Antriebsteil (200) eine Metallfassung (100) mit aufgeformtem Kunststoff aufweist, wobei die besagte Metallfassung (100) mit einer Bohrung (110) für das Einsetzen einer Antriebswelle und mit Gelenkmitteln des Scheibenwischerarms versehen ist, die zumindest eine Aufnahme (131, 132) für das Einsetzen eines Gelenkzapfens zur schwenkbaren Lagerung des Scheibenwischerarms umfassen , **dadurch gekennzeichnet,** daß die besagte Metallfassung (100) aus einem Metallblech durch Schneid-, Bohr- und Biegevorgänge ausgeführt ist, eine Grundplatte (103) enthält, in der die Bohrung (120) zur Bildung der Gelenkmittel ausgebildet ist, wobei die Grundplatte (103) seitlich, von der Antriebsachse (E) weg, durch zwei beabstandete Leisten (101, 102) verlängert wird, die mit zwei durch Biegen aufgerichteten Abschnitten (130, 140) versehen sind, die sich parallel zur Antriebsachse (E) einander gegenüberliegend erstrecken, um einen Gabelbügel zu bilden, der als Halterung für den Gelenkzapfen zur schwenkbaren Lagerung des Scheibenwischerarms am Antriebsteil entlang der Auslenkachse (D) dienen kann, und daß die Kunststoffaufformung (170) die besagte Grundplatte (103) und den durchbohrten Abschlußteil des besagten durch Biegen aufgerichteten Abschnitts (130, 140) überdeckt, wobei die besagte Aufformung (170) einen zylindrischen Durchgang (153) enthält, der mit der besagten Aufnahme (131, 132) für das Einsetzen des Gelenkzapfens zusammenfällt.

2. Scheibenwischer nach Anspruch 1 , **dadurch gekennzeichnet,** daß die besagte Bohrung (110) durch eine kegelstumpfartige Wandung (111) eingefaßt ist, die sich an ihrer Unterseite an die besagte Grundplatte (103) anschließt und von dieser weg zusammenläuft, wobei sie beim Einbau des Antriebsteils auf einer Antriebswelle mit konischer Auflagefläche zur Auflage kommt.

3. Scheibenwischer nach einem der Ansprüche 1 oder 2, **dadurch gekennzeichnet,** daß die besagte Metallfassung (100) außerdem einen Ansatz (120) für das Einsetzen einer Anpreßdruckfeder umfaßt, die zwischen dem Antriebsteil und dem Scheibenwischerarm wirksam ist, um einen Wischeranpreßdruck zum Andrücken des Wischergummis auf der zu wischenden Fläche auszuüben, wobei dieser Ansatz mindestens eine Öse (121) für das Einsetzen der besagten Feder enthält.

4. Scheibenwischer nach Anspruch 3 , **dadurch gekennzeichnet,** daß sich der Ansatz (120) zwischen den besagten Leisten (101, 102) und in Richtung des Innenraums zwischen den aufgerichteten Abschnitten (130, 140) erstreckt.

5. Scheibenwischer nach einem der Ansprüche 1 bis 4, **dadurch gekennzeichnet,** daß er zusätzlich eine Abdeckkappe umfaßt, die das Antriebsteil abdeckt und an diesem durch formschlüssiges Zusammenwirken zwischen ersten Einbaumitteln, die an der Innenfläche der besagten Abdeckkappe vorgesehen sind, und zweiten Einbaumitteln gehalten wird, die an der Außenfläche des Antriebsteils (200) angeformt sind.
